**Europäisches Patentamt**

**European Patent Office**

**Office européen des brevets**

(11) Veröffentlichungsnummer: **0 007 546**
**B2**

(12)  # NEUE EUROPÄISCHE PATENTSCHRIFT

(45) Veröffentlichungstag der neuen Patentschrift:
**30.05.84**

(51) Int. Cl.³: **H 01 R 35/00**, H 02 G 5/00,
H 01 R 4/08

(21) Anmeldenummer: **79102465.6**

(22) Anmeldetag: **16.07.79**

(54) Element zum Ausgleichen von durch thermische Einwirkung verursachten Längenänderungen von starren Strom-Leitern in elektrischen Anlagen sowie ein Verfahren zu dessen Herstellung.

(30) Priorität: **28.07.78 CH 8112/78**

(43) Veröffentlichungstag der Anmeldung:
**06.02.80 Patentblatt 80/3**

(45) Bekanntmachung des Hinweises auf die Patenterteilung:
**09.12.81 Patentblatt 81/49**

(45) Bekanntmachung des Hinweises auf die Entscheidung über den Einspruch:
**30.05.84 Patentblatt 84/22**

(84) Benannte Vertragsstaaten:
**AT DE FR GB IT NL SE**

(56) Entgegenhaltungen:
**CH - A - 511 521**
**DE - A - 2 059 031**
**DE - A - 2 606 683**
**DE - C - 675 781**
**FI - A - 762 732**
**US - A - 1 759 567**
**US - A - 3 479 944**
**US - A - 3 522 362**
**US - A - 3 548 071**
**US - A - 3 591 703**

(73) Patentinhaber: **GEORG FISCHER AKTIENGESELLSCHAFT**, Mühlentalstrasse 105, **CH-8201 Schaffhausen (CH)**

(72) Erfinder: **Hofer, Peter, Windegg, CH-8211 Hofen (CH)**

### Beschreibung

Die Erfindung betrifft ein Element zum Ausgleichen von durch thermische Einwirkung verursachten Längenänderungen von starren Stromleitern in elektrischen Anlagen mit mindestens drei kreisförmig angeordneten einzelnen biegsamen Leitern, insbesondere Seile bzw. Drahtbügel, deren beide Enden jeweils mit einem Endteil fest verbunden und elastisch gegeneinander um mindestens 30° um die Längsachse verdreht sind.

Ferner bezieht sich die Erfindung auf ein Verfahren zur Herstellung des Ausgleichselementes.

Ausgleichselemente werden beispielsweise in Freiluft- oder SF$_6$-Anlagen zum Ausgleichen von thermisch bedingten Längenänderungen von starren Strom-Leitern verwendet. Die Ausgleichselemente werden z.B. so in starren Leitern eingesetzt, dass die Befestigungselemente bei Temperaturänderungen mechanisch nicht übermässig stark belastet werden.

Bekannte Ausgleichselemente bestehen z.B. aus gebogenen Metallbändern, die zu Paketen zusammengelegt sind und an beiden Enden durch Schweissen oder Explosionsschweissen miteinander verbunden sind. Eine solche Ausführung ist beispielsweise in der CH-PS 554 059 beschrieben.

Ferner sind Ausgleichselemente aus hochflexiblen Flachlitzen bekannt, die an beiden Enden in Metallhülsen gepresst sind.

Weiterhin ist ein Element der eingangs genannten Art bekanntgeworden (Fi – A – 762 732), bei welchem jeder der einzelnen als Drahtseil ausgebildeten, biegsamen Leiter in jeweils einer Hülse bzw. in jeweils einer Bohrung von umfangsmässig angeordneten Rippen angeordnet und mit dieser verschweisst ist. Jedes Leiterende muss hierbei getrennt mit der Hülse verschweisst werden, was sehr aufwendig und zeitraubend ist.

Ausserdem ist es schwierig, mittels einer normalen Schweissung, insbesondere bei Aluminium, oder mittels Einpressen eine auf Dauer haltbare Verbindung zwischen diesen Teilen zu schaffen.

Bestehende Ausführungen sind z.B. mit dem Nachteil behaftet, dass, wegen der scharfen Kanten, Sprühschutzarmaturen erforderlich sind.

Aufgabe der Erfindung ist somit die Schaffung eines Ausgleichselementes für Längenänderungen infolge thermischer Einwirkung in starren Stromleitern sowie ein Verfahren zur Herstellung des Ausgleichselementes, wobei das Element und das Verfahren u.a. bezüglich des Glimmeffekts, Verbesserungen gegenüber bestehenden Ausführungen aufweisen sollen.

Diese Aufgabe ist mit der Lehre gemäss dem gekennzeichneten Teil der Ansprüche 1 und 2 gelöst.

Ausführungsformen dieser Lehre sind in den weiteren, abhängigen Ansprüchen umschrieben.

Die beschriebene Ausführung

– hat einen sehr niedrigen Übergangswiderstand zwischen den Leitern und den Anschlussklemmen,

– ist wegen der relativ dickdrahtigen Leiter sehr robust,

– hat eine sehr hohe dynamische Festigkeit bei grossen, auszugleichenden Strecken,

– hat wegen der regelmässigen konstruktiven Anordnung der Seile einen sehr niedrigen Glimmeffekt, und

– kann einfach und preisgünstig hergestellt werden.

Nachfolgend werden Ausführungsbeispiele des Gegenstandes der Erfindung anhand der Zeichnung näher erläutert:

Es zeigen:

Fig. 1 eine Seitenansicht eines Ausgleichselementes,

Fig. 2 einen Querschnitt,

Fig. 3 einen anderen Querschnitt,

Fig. 4 eine der Fig. 1 ähnliche Ausführung, jedoch mit eingebautem Führungsstab,

Fig. 5 eine der Fig. 4 ähnliche Ausführung, jedoch mit einer mittigen Klemme, und

Fig. 6–10 verschiedene Klemmenausführungen.

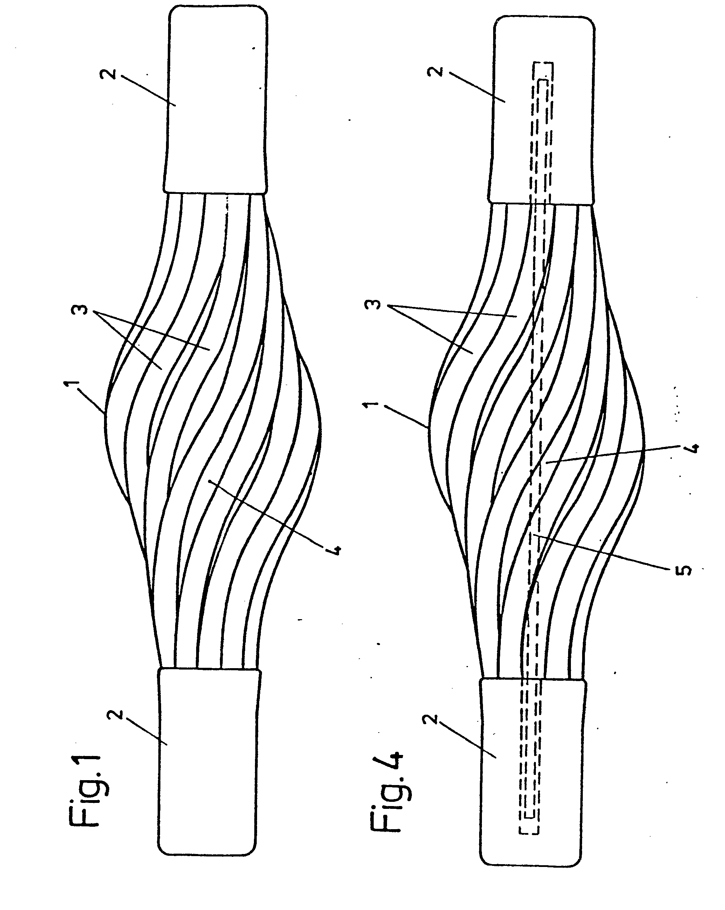

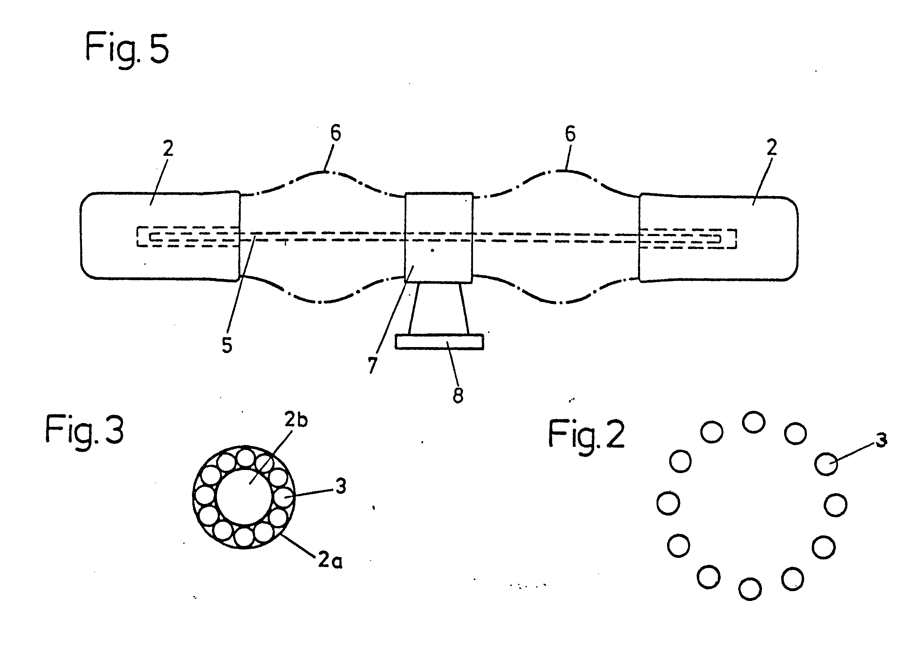

In Fig. 1 ist ein Ausgleichselement mit einem flexiblem Leiterteil 1 und zwei Endteilen 2 dargestellt, die jeweils aus einem in einem Becher oder einer Hülse 2a konzentrisch angeordneten Bolzen 2b bestehen können (Fig. 3). Aus Fig. 1 und 2 geht hervor, dass der Leiterteil 1 aus einer Anzahl von kreisförmig angeordneten Leitern 3, wie Seilen oder Drahtbündel, besteht, die etwa schraubenlinienförmig zwischen den beiden Endteilen 2 verlaufen. In der Mitte hat der Leiterteil 1 einen grösseren Umfang als an den beiden Enden, wobei die Drahtbündel 3 an den Enden parallel zusammengepresst verlaufen, während sie in der Mitte auseinanderliegen und einen etwa ellipsoidförmigen Raum 4 begrenzen. Bei zunehmenden Stromleiter-Temperaturen erweitert sich der Durchmesser dieses Raumes 4 und bei sinkenden Temperaturen wird er kleiner. In dieser Weise ist eine Kompensation von thermischen Einflüssen möglich, ohne dass die Verbindungsstellen zwischen den Klemmen bzw. den Endteilen 2 und den Anschlussklemmen z.B. an einem Schalter nennenswert mechanisch stärker belastet werden.

Als Drahtbündel 3 wird zweckmässigerweise übliche Handelsware aus Aluminium bzw. Aluminiumlegierung für Stromleitungen verwendet. Diese Drahtbündel sind aus einer Vielzahl von Drähten zusammengesetzt. Dabei ist eine Anzahl von parallelen Kerndrähten von weiteren Drähten schraubenlinienförmig umwickelt, die alle aus dem gleichen Material bestehen. Diese Drähte bilden zusammen ein Seil oder Drahtbündel.

Es besteht ferner die Möglichkeit, statt Seile, einzelne Drähte zu verwenden, wobei aber diese relativ dünn sein müssen, damit eine ausreichende Flexibilität des Ausgleichselementes gewährleistet ist.

In Fig. 3 ist eine Ausführung des Endteils 2 gezeigt, der in der Mitte einen Bolzen 2b aufweist, wobei die einzelnen Leiter 3 zwischen dem Bolzen 2b und der Hülsenwandung des Endteils 2 angeordnet sind. Der Bolzen ist z.B. mit einem mittigen, axialen Loch versehen, wenn ein Führungsstab 5 verwendet wird, wie dies in Fig. 4 gezeigt ist. Dieser Führungsstab 5 dient zur Erhöhung der Festigkeit des Elementes in bezug auf Biege- und/oder Torsionsbeanspruchung. Der Führungsstab 5 ist gleitbar im Bolzen 2b angeordnet, wobei genügend Spiel in der Längsrichtung des Bolzens 2b vorgesehen ist, um Längsverschiebungen des Führungsstabes 5 aufnehmen zu können, der normalerweise in einem Endteil 2 befestigt und im anderen Endteil 2 gleitbar angeordnet ist.

In Fig. 5 ist eine Variante zu Fig. 1 dargestellt, wobei der Führungsstab 5 in den beiden Endteilen 2 gleitbar angeordnet ist. Anstelle von einer sind zwei Ausbuchtungen 6 vorgesehen, zwischen welchen eine Klemmvorrichtung 7 mit Trägerflansch 8 angeordnet ist. Diese Vorrichtung 7 dient als Stütze für das Ausgleichselement, damit es sich bei bestimmten, z.B. durch angeschlossene Leitungen oder Sammelschienen verursachte Lasten von der Längsachse weg nicht verformt. Der Trägerflansch 8 wird normalerweise an einem Isolator montiert.

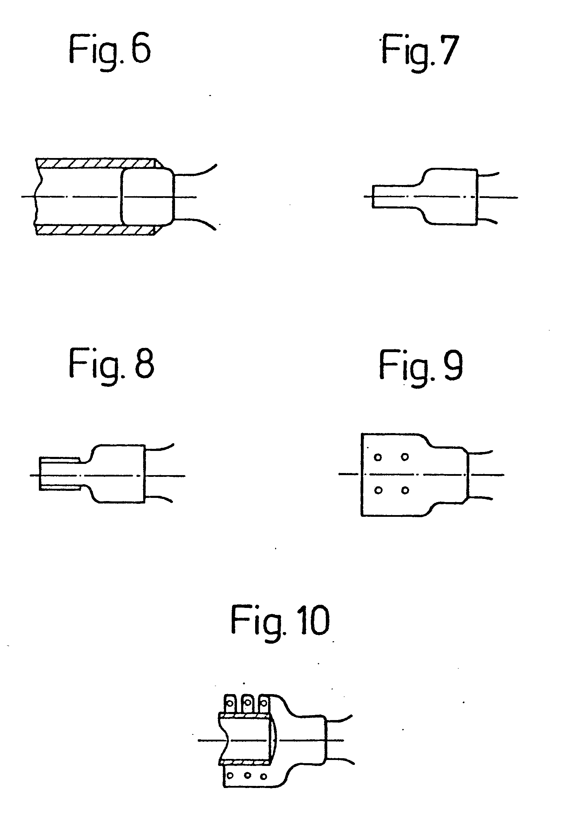

In den Fig. 6 bis 10 sind verschiedene Anschlussmöglichkeiten dargestellt. Dabei wird in Fig. 6 ein Al-Anschweissbolzen für Rohre und in Fig. 7 ein Al-Klemmrundbolzen verwendet. Ferner kann ein Cu-plattierter Al-Klemmrundbolzen (Fig. 8) oder ein Al-Flachschraubenanschluss (Fig. 9) verwendet werden, der auch kupferplattiert sein kann. Schliesslich ist auch ein Al-Rohranschluss verwendbar (Fig. 10).

Die verschiednenen Anschlüsse können auch durch Explosionsschweissen mit den Endteilen verbunden werden oder Teile derselben bilden.

Zur Herstellung des Ausgleichselementes wird die erforderliche Anzahl von Seilen bzw. Leitern auf die gewünschte Länge abgeschnitten. Dann werden die Enden in die becherförmigen Endteile oder Hülse derart eingelegt, dass sie zwischen der Hülsenwand und dem Bolzen oder Rohr zu liegen kommen. Danach werden die Seile durch Explosionsschweissen mit den Endteilen verbunden.

Danach wird ein elastischer Körper, z.B. ein Spielball, zwischen den Drahtbündeln eingepresst, wobei in Fig. 5 zwei Körper eingesetzt werden. Um eine gute Elastizität des Elementes zu erreichen, wird es unter Ausübung einer Zugkraft in deren Längsrichtung in eine Vorrichtung eingespannt und anschliessend um mindestens 30° gedreht. Die Zugkraft ist dabei so bemessen, dass die infolge der Verdrehung verursachte Kürzung des Elementes ermöglicht wird.

Durch diese Verdrehung wird ein elastisches Element geschaffen, das seine Länge ohne grossen Widerstand ändern kann.

Die Anschlüsse bzw. Anschlussstücke an den beiden Enden des Elementes können unterschiedlich ausgebildet sein.

Ausgleichelemente der gezeigten Art sind für Stromstärken bis 6000 A und mehr herstellbar.

## Patentansprüche

1. Element zum Ausgleichen von durch thermische Einwirkung verursachten Längenänderungen von starren Stromleitern in elektrischen Anlagen mit mindestens drei kreisförmig angeordneten einzelnen biegsamen Leitern (3), insbesondere Seile bzw. Drahtbündel, deren beide Enden jeweils mit einem Endteil (2) fest verbunden und elastisch gegeneinander um mindestens 30° um die Längsachse verdreht sind, dadurch gekennzeichnet, dass die Enden der biegsamen Leiter (3) parallel liegend zwischen einer Hülse (2a) und einem Bolzen (2b) angeordnet und durch eine Explosionsverschweissung fest mit diesen Teilen (2a, 2b) verbunden sind, und dass das Element mindestens in einem dazwischenliegenden Bereich durch eine radiale Ausbiegung der einzelnen Leiter (3) einen grösseren Umfang aufweist als an den beiden Enden.

2. Verfahren zur Herstellung des Elementes nach Anspruch 1, dadurch gekennzeichnet, dass die biegsamen Leiter an beiden Enden jeweils zwischen einem Bolzen und einer Hülse mit diesen explosionsverschweisst werden, dass nach der Explosionsverschweissung mindestens ein den kreisförmigen Umfang aufweitender kugelförmiger elastischer Körper zwischen den biegsamen Leitern eingesetzt wird, der sich beim Verdrehen der beiden Enden des Elementes gegeneinander um mindestens 30° unter Zug etwa ellipsoidförmig verformt.

3. Element nach Anspruch 1, dadurch gekennzeichnet, dass jeder biegsame Leiter (3) aus einem Drahtseil bzw. Drahtbündel besteht.

4. Element nach Anspruch 1, dadurch gekennzeichnet, dass jeder biegsame Leiter (3) aus einem einzigen Draht besteht.

5. Element nach Anspruch 1, dadurch gekennzeichnet, dass die biegsamen Leiter (3) aus Aluminium oder einer Aluminiumlegierung bestehen.

6. Element nach Anspruch 1, dadurch gekennzeichnet, dass die biegsamen Leiter (3) aus Kupfer bestehen.

7. Element nach Anspruch 1, dadurch gekennzeichnet, dass die Endteile mit Anschlüssen für die Stromverbindung versehen sind.

8. Element nach Anspruch 7, dadurch gekennzeichnet, dass die Anschlüsse aus Rundbolzen oder Flachanschlüssen bestehen.

9. Element nach Anspruch 7, dadurch gekennzeichnet, dass der Anschluss jeweils für direktes Einschweissen in einen rohrförmigen elektrischen Leiter ausgebildet ist.

10. Element nach Anspruch 7, dadurch gekennzeichnet, dass das Anschlussstück aus einer Aluminiumlegierung besteht.

11. Element nach Anspruch 10, dadurch gekennzeichnet, dass das Anschlussstück mit Kupfer explosionsplattiert ist.

12. Element nach Anspruch 1, dadurch gekennzeichnet, dass die Hülse (2a) und der Bolzen (2b) einstückig sind.

13. Element nach Anspruch 1, dadurch gekennzeichnet, dass der mittige Durchmesser grösser ist als an den Enden.

14. Element nach Anspruch 1, dadurch gekennzeichnet, dass der Bolzen (2b) in der Achsrichtung ein kreisförmiges Loch zur Aufnahme eines Stabes (5) für die Führung in der Längsrichtung enthält.

15. Element nach Anspruch 1, dadurch gekennzeichnet, dass der Bolzen (2b) ein nicht kreisförmiges Loch zur Aufnahme eines Stabes (5) zur Verhinderung einer Verdrehung des Elementes enthält.

16. Element nach Anspruch 14 oder 15, dadurch gekennzeichnet, dass der Stab (5) mit einem der Bolzen (2b) fest verbunden ist und im anderen Bolzen (2b) gleitbar angeordnet ist.

17. Element nach Anspruch 14 oder 15, dadurch gekennzeichnet, dass der Stab (5) in beiden Bolzen (2b) gleitbar angeordnet ist.

18. Verfahren nach Anspruch 2, dadurch gekennzeichnet, dass der Körper ein luftgefüllter Spielball ist, den man nach dem Verdrehen dadurch entfernt, dass man ihn durchschneidet und ihn dann in zusammengeschrumpftem Zustand zwischen den biegsamen Leitern herauszieht.

19. Verfahren nach Anspruch 2, dadurch gekennzeichnet, dass der Körper ein aufblasbarer Balg ist, den man luftleer in das Element einsetzt und dann aufbläst, wobei er nach dem Verdrehen entleert und ausgezogen wird.

20. Verfahren nach Anspruch 2, dadurch gekennzeichnet, dass je ein Körper zwischen einer mittigen Klemmvorrichtung und der Hülse eingesetzt wird.

## Claims

1. Element for compensation of length variations of rigid conductors in electric power installations due to thermal influences, with at least three circularly arranged individual flexible conductors (3), in particular cable or wire coils, the two ends of which are respectively rigidly connected to an end part (2) and are elastically twisted by at least 30° around the longitudinal axis, characterised in that the ends of the flexible conductors (3) are arranged to lie parallel between a casing (2a) and a bolt (2b) and are rigidly connected by means of explosion welding to these parts (2a, 2b), and in that the element, at least in an intermediately lying area, through a radial deflection of the individual conductors (3), has a larger circumference than at the two ends.

2. Method for producing the element according to claim 1, characterised in that the flexible conductors are respectively explosion welded at each end between a bolt and a casing, in that after the explosion welding at least one ball-shaped elastic body, increasing the circular circumference, is inserted between the flexible conductors, which body, by twisting both ends of the element by at least 30° under the action of pulling force, receives an approximately ellipsoidal shape.

3. Element according to claim 1, characterized in that each flexible conducter (3) consists of a wire-coil.

4. Element according to claim 1, characterized in that each flexible conductor (3) consists of a single wire.

5. Element according to claim 1, characterized in that the flexible conductors (3) are made of aluminium or an aluminium alloy.

6. Element according to claim 1, characterized in that the flexible conductors (3) are made of copper.

7. Element according to claim 1, characterized in that the end positions are provided with terminals for the current connections.

8. Element according to claim 7, characterized in that the terminals are round or flat.

9. Element according to claim 7, characterized in that the terminals are shaped for direct welding into a tube-shaped electrical conductor.

10. Element according to claim 7, characterized in the terminal is made of an aluminium alloy.

11. Element according to claim 10, characterized in that the terminals is made of explosion-plated copper.

12. Element according to claim 1, characterized in that the casing (2a) and the bolt (2b) consist of one part.

13. Element according to claim 1, characterized in that the diameter in the middle is larger than at the ends.

14. Element according to claim 1, characterized in that the bolt (2b) possesses an circular axial hole for receiving a guide rod (5) for the longitudinal direction.

15. Element according to claim 1, characterized in that the bolt (2b) has a not circular hole for receiving a rod in order to prevent a twisting of the element.

16. Element according to claim 14 or 15, characterized in that the rod (5) is firmly connected to one of the bolts (2b) and is slideably placed in the other bolt (2b).

17. Element according to claim 14 or 15, characterized in that the rod (5) is being slideable in both bolts (2b).

18. Method according to claim 2, characterized in that the body is a pneumatic play ball, that is being cut and removed in inflated condition between the flexible conductors after finished twisting operation.

19. Method according to claim 2, characterized in that the body is an inflatable bellows which is being inserted in the element in deflated condition and is being inflated therein and that the bellows is being deflated for removal after the twisting operation.

20. Method according to claim 2, characterized in that separate bodies are being inserted between a central clamping means and both casings.

## Revendications

1. Elément compensateur de variations thermiques de longueur de conducteurs rigides dans des installations électriques, à partir d'au moins trois conducteurs flexibles disposés en cercle, et caractérisé en ce que les deux extrémités des conducteurs flexibles (3) sont soudées chacune par explosion entre une âme (2b) et une gaine (2a); et que les deux extrémités subissent une torsion élastique relative de 30° au moins autour de l'axe longitudinale.

2. Procédé de production de l'élément selon la revendications 1, caractérisé en ce que les deux extrémités des conducteurs flexibles sont soudées chacune par explosion entre une âme et une gaine; puis après le soudage par explosion, au moins un corps sphérique élastique est inséré entre les conducteurs flexibles, avec déformation par traction en un ellipsoïde, lors d'une torsion d'au moins 30° de l'élément.

3. Elément selon la revendication 1, caractérisé en ce que chaque conducteur flexible (3) est constitué par un câble ou un faisceau de fils.

4. Elément selon la revendication 1, caractérisé en ce que chaque conducteur flexible (3) est constitué par un fil unique.

5. Elément selon la revendication 1, caractérisé en ce que les conducteurs flexibles (3) sont réalisés en aluminium ou alliage d'aluminium.

6. Elément selon la revendication 1, caractérisé en ce que les conducteurs flexibles (3) sont réalisés en cuivre.

7. Elément selon la revendication 1, caractérisé en ce que les embouts sont munis de raccords pour la connexion de courant.

8. Elément selon la revendication 7, caractérisé en ce que les raccords sont constitués par des axes ronds ou des plages de connexion.

9. Elément selon la revendication 7, caractérisé en ce que le raccord est réalisé pour soudage direct dans un conducteur électrique tubulaire.

10. Elément selon la revendication 7, caractérisé en ce que le raccord est réalisé dans un alliage d'aluminium.

11. Elément selon la revendication 10, caractérisé en ce que le raccord est plaqué par explosion avec du cuivre.

12. Elément selon la revendication 1, caractérisé en ce que la gaine (2a) et l'âme (2b) forment une seule pièce.

13. Elément selon la revendication 1, caractérisé en ce que le diamètre au centre est supérieure à celui des extrémités.

14. Elément selon la revendication 1, caractérisé en ce que l'âme (2b) comporte axialement un trou circulaire pour le logement d'une tige (5) de guidage longitudinal.

15. Elément selon la revendication 1, caractérisé en ce que l'axe (2b) comporte un trou non circulaire pour le logement d'une tige (5) interdisant une torsion de l'élément.

16. Elément selon une des revendications 14 et 15, caractérisé en ce que la tige (5) est solidaire d'une des âmes (2b) et coulisse dans la seconde âme (2b).

17. Elément selon une des revendications 14 et 15, caractérisé en ce que la tige (5) coulisse dans les deux âmes (2b).

18. Procédé selon la revendication 2, caractérisé en ce que le corps est une balle remplie d'air et qui, après la torsion, est crevée, puis retirée dans l'état dégonflé entre les conducteurs flexibles.

19. Procédé selon la revendication 2, caractérisé en ce que le corps est un soufflet gonflable, qui est introduit non gonflé dans l'élément, est ensuite gonflé, puis vidé et retiré après torsion.

20. Procédé selon la revendication 2, caractérisé par l'insertion d'un corps entre un dispositif central de serrage et chacune des gaines.

Fig.1

Fig.4

Fig. 5

Fig. 3

Fig. 2

0 007 546

Fig. 6

Fig. 7

Fig. 8

Fig. 9

Fig. 10